(19)

Europäisches
Patentamt
European
Patent Office
Office européen
des brevets

(11) **EP 2 407 426 A1**

(12) **EUROPEAN PATENT APPLICATION**
published in accordance with Art. 153(4) EPC

(43) Date of publication:
**18.01.2012 Bulletin 2012/03**

(51) Int Cl.:
*C01B 35/12* (2006.01) *H01M 4/58* (2010.01)

(21) Application number: **10750890.5**

(22) Date of filing: **04.03.2010**

(86) International application number:
**PCT/JP2010/054075**

(87) International publication number:
**WO 2010/104137 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.03.2009 JP 2009054842**

(71) Applicants:
• **National Institute of Advanced Industrial Science and Technology**
  **Tokyo 100-8921 (JP)**
• **Kabushiki Kaisha Toyota Jidoshokki**
  **Kariya-shi, Aichi 448-8671 (JP)**

(72) Inventors:
• **KOJIMA, Toshikatsu**
  **Ikeda-shi**
  **Osaka 563-8577 (JP)**

• **SAKAI, Tetsuo**
  **Ikeda-shi**
  **Osaka 563-8577 (JP)**
• **MIYUKI, Takuhiro**
  **Ikeda-shi**
  **Osaka 563-8577 (JP)**
• **KOJIMA, Akira**
  **Kariya-shi**
  **Aichi 448-8671 (JP)**
• **NIWA, Junichi**
  **Kariya-shi**
  **Aichi 448-8671 (JP)**
• **MURASE, Hitotoshi**
  **Kariya-shi**
  **Aichi 448-8671 (JP)**

(74) Representative: **TBK**
  **Bavariaring 4-6**
  **80336 München (DE)**

(54) **PROCESS FOR PRODUCING LITHIUM BORATE COMPOUND**

(57) A process is provided, process which makes it possible to produce lithium-borate-system materials by means of relatively simple means, lithium-borate-system materials which are useful as positive-electrode active materials for lithium-ion secondary battery, and the like, whose cyclic characteristics, capacities, and so forth, are improved, and which have better performance. The present production is **characterized in that** a divalent metallic compound including at least one member of compounds that is selected from the group consisting of divalent-iron compounds and divalent-manganese compounds, and boric acid as well as lithium hydroxide are reacted at 400-650 °C in a molten salt of a carbonate mixture comprising lithium carbonate and at least one member of alkali-metal carbonates that is selected from the group consisting of potassium carbonate, sodium carbonate, rubidium carbonate and cesium carbonate in a reducing atmosphere.

Fig.1

Fig.1 XRD Pattern of LiFeBO₃

EP 2 407 426 A1

**Description**

<u>TECHNICAL FIELD</u>

The present invention relates to a production process for lithium-borate-system compound, which is useful as the positive-electrode active materials of lithium-ion batteries, and the like, and to uses or applications for the lithium-borate-system compound that is obtainable by this process.

<u>BACKGROUND ART</u>

Lithium secondary batteries have been used widely as power sources for portable electronic instruments, because they are small-sized and have high energy densities. As for their positive-electrode active materials, lamellar compounds, such as $LiCoO_2$, have been used mainly. However, these compounds have such a drawback that the oxygen is likely to be eliminated before and after 150 °C under the fully-charged conditions so that this is likely to cause the oxidative exothermic reactions of nonaqueous electrolyte liquids.

Recently, as for positive-electrode active material, olivine-type phosphate compounds, Li"M"$PO_4$ ($LiMnPO_4$, $LiFePO_4$, $LiCoPO_4$, and the like), have been proposed. This type upgrades the thermal stabilities by means of using the divalent/trivalent oxidation-reduction reaction, instead of the trivalent/tetravalent oxidation-reduction in which an oxide like $LiCoO_2$ serves as a positive-electrode active material; and has been attracting attention as a type from which higher discharging voltages are available by means of further arranging the polyanions of hetero elements whose electronegativities are higher around the central metal.

However, in a positive-electrode material comprising an olivine-type phosphate compound, its theoretical capacity is limited to 170 mAh/g approximately because of the large molecular weight of polyanions of phosphoric acids. Furthermore, $LiCoPO_4$ and $LiNiPO_4$ have such a problem that no electrolytic liquids, which can withstand their charging voltages, are available because the operating voltages are too high.

Hence, as a cathode material that is inexpensive, which is more abundant in the amount of resource, which is lower in the environmental load, which has a higher theoretical charging-discharging capacity of lithium ion, and which does not release any oxygen at the time of high temperature, lithium-borate-system materials, such as $LiFeBO_3$ (with 220-mAh/g theoretical capacity) and $LiMnBO_3$ (with 222-mAh/g theoretical capacity), have been attracting attention. The lithium-borate-system materials are materials from which the improvement of energy density is expectable because of the use of B that is the lightest element among polyanion units. Moreover, weight saving is also expectable because the true density of borate-system material (e.g., 3.46 g/cm$^3$) is smaller than the true density of olivine-type iron-phosphate material (e.g., 3.60g/cm$^3$).

As for a synthesizing process for borate-system compound, the solid-phase reaction methods have been known, solid-phase reaction methods in which raw-material compounds are reacted in the state of solid phase (refer to following Non-patent Literature Nos. 1 through 3). However, in the solid-phase reaction methods, although it is feasible to dissolve doping elements because it is needed to cause reactions at such high temperatures as 600 °C or more for a long period of time, the resulting crystal grains become larger to 10 $\mu$m or more, thereby leading to such a problem that the diffusion of ions is slow. Besides, since the reactions are caused at the high temperatures, the doping elements, which have not dissolved completely, precipitate to generate impurities in the coolingprocess, and so there is such a problem that the resultant resistance becomes higher. In addition, since lithium-deficient or oxygen-deficient borate-system compounds have been made due to the heating being done up to the high temperatures, there is also such a problem that it is difficult to increase capacities or to upgrade cyclic characteristics.

Non-patent Literature No. 1: Y. Z. Dong et al., Electrochemie. Acta., vol. 53, pp. 2,339-2,345 (2008);
Non-patent Literature No. 2: Y. Z. Dong et al., J. Alloys Comp., vol. 461, pp. 585-590 (2008); and
Non-patent Literature No. 3: V. Legagneur et al., Solid State Ionics, vol. 139, pp. 37-46 (2001);

<u>DISCLOSURE OF THE INVENTION</u>

The present invention is one which has been done in view of the current situations of the aforementioned conventional technologies. Its major objective is to provide a process with regard to lithium-borate-system material that is useful as a positive-electrode active material for lithium-ion secondary battery, and the like, the process being capable of producing materials whose cyclic characteristics, capacities, and so forth, are improved to have superior performance, by means of relatively simple means.

The present inventors had been studying earnestly to achieve the aforementioned object repeatedly. As a result, they found out that, in accordance with a method of using a metallic compound including an iron compound or a manganese compound, boric acid and lithium hydroxide as raw materials and then reacting the aforementioned raw materials in a molten salt of a mixture of lithium carbonate and the other alkali-metal carbonate in a reducing atmosphere, it is possible to obtain a lithium-borate-system compound including iron or manganese under relatively mild conditions. And, they found out that the obtained lithium-borate-system compound turns into a borate-system compound that is fine, and which has impurity phases less but includes lithium atoms excessively, and that it becomes a material whose cyclic characteristics are favorable, and which has a high capacity, in a case of being used as a positive-electrode active material for lithium-ion secondary battery. And then, they arrived at completing the present invention herein.

Specifically, the present invention is one which provides the following production processes for lithium-borate-system compound, lithium-borate-system compounds being obtained by these processes, and their intended uses or applications.

1. A production process for lithium-borate-system compound, the production process being **characterized in that**:

a divalent metallic compound including at least one member of compounds that is selected from the group consisting of divalent-iron compounds and divalent-manganese compounds, and boric acid as well as lithium hydroxide are reacted at 400-650 °C in a molten salt of a carbonate mixture comprising lithium carbonate and at least one member of alkali-metal carbonates that is selected from the group consisting of potassium carbonate, sodium carbonate, rubidium carbonate and cesium carbonate in a reducing atmosphere.

2. The production process as set forth in aforementioned article No. 1, wherein the divalent metallic compound is one which includes:

at least one member of compounds that is selected from the group consisting of divalent-iron compounds and divalent-manganese compounds in an amount of from 50 to 100% by mol; and
a compound that includes at least one member of divalent metallic elements that is selected from the group consisting of Mg, Ca, Co, Al, Ni, Nb, Mo, W, Ti and Zr in an amount of from 0 to 50% by mol;
when the entirety of those metallic compounds is taken as 100% by mol.

3. The production process as set forth in aforementioned article No. 1 or 2, wherein the reducing atmosphere is a mixed-gas atmosphere of a reducing gas and at least one member of gases that is selected from the group consisting of nitrogen and carbon dioxide.

4. A production process for lithium-borate-system compound, the production process including a step of removing the alkali-metal carbonate, which is used as a flux, by means of a solvent, after producing a lithium-borate-system compound by either one of the processes according aforementioned article Nos. 1 through 3.

5. The production process as set forth in either one of aforementioned article Nos. 1 through 4, wherein a lithium-borate-system compound to be formed is a compound being expressed by a compositional formula:

$$Li_{1+a-b}A_bAM_{1-x}M'_xBO_{3+c}:$$

where "A" is at least one element that is selected from the group consisting of Na, K, Rb and Cs;
"M" is at least one element that is selected from the group consisting of Fe and Mn;
"M'" is at least one element that is selected from the group consisting of Mg, Ca, Co, Al, Ni, Nb, Mo, W, Ti and Zr; and
the respective subscripts are specified as follows:

$$0 \leqq x \leqq 0.5;$$

$$0 < a < 1;$$

$$0 \leqq b < 0.2;$$

$$0 < c < 0.3;$$

and

$$a > b;$$

in the formula.

6. A production process for lithium-borate-system compound whose electrical conductivity is upgraded, the production process being **characterized in that**:

a heat treatment is carried out in a reducing atmosphere after adding a carbonaceous material and $Li_2CO_3$ to a lithium-borate-system compound being obtained by either one of the processes according aforementioned article Nos. 1 through 5 and then mixing them by means of ball mill until they turn into being amorphous.

7. A production process for fluorine-containing lithium-borate-system compound that is expressed by a compositional formula:

$$Li_{1+a-b}A_bM_{1-x}M'_xBO_{3+c-y}F_{2y}:$$

where "A" is at least one element that is selected from the group consisting of Na, K, Rb and Cs;
"M" is Fe or Mn;
"M'" is at least one element that is selected from the group consisting of Mg, Ca, Co, Al, Ni, Nb, Mo, W, Ti and Zr; and the respective subscripts are specified as follows:

$$0 \leqq x \leqq 0.5;$$

$$0 < a < 1;$$

$$0 \leqq b < 0.2;$$

$$0 < c < 0.3;$$

$$0 < y < 1;$$

and

$$a > b;$$

in the formula;
the production process being **characterized in that**:

a heat treatment is carried out in a reducing atmosphere after adding a carbonaceous material and LiF to a lithium-borate-system compound being obtained by either one of the processes according aforementioned article Nos. 1 through 5 and then mixing them by means of ball mill until they turn into being amorphous.

8. A positive-electrode active material for lithium-ion secondary battery, the positive-electrode active material comprising a lithium-borate-system compound that is obtained by means of either one of the processes according aforementioned article Nos. 1 through 7.

9. A positive electrode for lithium secondary battery, the positive electrode including a lithium-borate-system compound that is obtained by means of either one of the processes according aforementioned article Nos. 1 through 7 as an active material.

10. A lithium secondary battery including the positive electrode as set forth in aforementioned article No. 9 as a constituent element.

Hereinafter, explanations will be made in detail on a production process for lithium-borate-system compound according to the present invention.

<Composition of Molten Salt>

In a production process for lithium-borate-system compound according to the present invention, it is necessary to carry out a synthesizing reaction for lithium-borate-system compound in a molten salt of a carbonate mixture comprising lithium carbonate ($Li_2CO_3$), and at least one member of alkali-metal carbonates that is selected from the group consisting of potassium carbonate ($K_2CO_3$), sodium carbonate ($Na_2CO_3$), rubidium carbonate ($Rb_2CO_3$) and cesium carbonate ($Cs_2CO_3$). Although the molten temperature is 700 °C approximately when using lithium carbonate independently, it is possible to establish a molten temperature that falls down below 650 °C when a mixture of lithium carbonate and the other alkali-metal carbonate serves as a molten salt, and hence it becomes feasible to synthesize a targeted lithium-borate-system compound at such a relatively low reaction temperature of from 400 to 650 °C . As a result, the granular growth can be inhibited at the time of synthesizing lithium borate, and so fine lithium-borate-system compounds can be formed. Moreover, in a case of causing reactions in a molten salt of the carbonate mixture under the aforementioned condition, the formation of impurity phases is less, and besides lithium-borate-system compounds that include lithium atoms excessively can be formed, due to the fact that lithium carbonate is included in the carbonate mixture. Lithium-borate-system compounds that are obtainable in this manner make positive-electrode materials for lithium-ion battery that has favorable cyclic characteristics and high capacity.

It is advisable to set a mixing proportion of lithium carbonate and that of at least one member of alkali-metal carbonates that is selected from the group consisting of potassium carbonate, sodium carbonate, rubidium carbonate and cesium carbonate so that the molten temperature of a molten salt to be formed can be a temperature that falls down below 650 °C. As to the ratio of lithium carbonate in the aforesaid carbonate mixture, although it is not restrictive particularly, it is usually preferable to be 30% by mol or more, or to fall in a range of from 30 to 70% by mol especially, when taking the total number of moles in the aforesaid carbonate mixture as the standard.

As for an example of the aforesaid carbonate mixture, it is possible to give a mixture that comprises lithium carbonate in an amount of from 30 to 70% by mol, sodium carbonate in an amount of from 0 to 60% by mol, and potassium carbonate in an amount of from 0 to 50% by mol. As for preferable examples of such a carbonate mixture, it is possible to give the following: a mixture that comprises lithium carbonate in an amount of from 40 to 45% by mol, sodiumcarbonate in an amount of from 30 to 35% by mol, and potassium carbonate in an amount of from 20 to 30% by mol; a mixture that comprises lithium carbonate in an amount of from 50 to 55% by mol, and sodium carbonate in an amount of from 45 to 50% by mol; a mixture that comprises lithium carbonate in an amount of from 60 to 65% by mol, and potassium carbonate in an amount of from 35 to 40% by mol, and the like.

<Raw-material Compound>

In the present invention, a divalent metallic compound including at least one member of compounds that is selected from the group consisting of divalent-iron compounds and divalent-manganese compounds, and boric acid ($H_3BO_3$) as well as lithium hydroxide (LiOH), are used as for the raw materials.

As to the types of divalent-iron compounds and divalent manganese compounds, although they are not restrictive particularly, it is preferable to use oxalate, such as iron oxalate or manganese oxalate, in order that these compounds are likely to be maintained to be divalent. It is possible to use either one of a divalent-iron compound and a divalent-manganese compound, or to mix the two to use.

In the present invention, although at least one member of compounds that is selected from the aforementioned divalent-iron compounds and divalent-manganese compounds is indispensable as the divalent-metallic compound, it is possible to further use another metallic compound, if needed. As for the other metallic compound, it is possible to use a compound including at least one member of divalent metallic elements that is selected from the group consisting of Mg, Ca, Co, Al, Ni, Nb, Mo, W, Ti and Zr. As for the compound including these divalent metallic elements, it is even allowable to be a compound including one species of the aforementioned metallic elements alone. Alternatively, it is also permissible to be a composite compound including two or more species of the metallic elements. Moreover, it is possible to use one species of compounds including the divalent metallic elements independently, or to mix two or more species of them to use. As to the types of compounds including theses divalent metallic elements, they are not restrictive particularly, and so it is possible to use sulfates, carbonates and hydroxides, in addition to oxalates.

When the entirety of the divalent metallic compounds is taken as 100% by mol, it is necessary that an amount of at least one member of compounds that is selected from the group consisting of divalent-iron compounds and divalent-manganese compounds can be 50% by mol or more. That is, when the entirety of the divalent metallic compounds is taken as 100% by mol, it is possible to set an amount of a compound including at least one member of divalent metallic elements, which is selected from the group consisting of Mg, Ca, Co, Al, Ni, Nb, Mo, W, Ti and Zr, to be from 0 to 50% by mol.

As to an amount of use for the divalent metallic compound including at least one member of compounds that is selected from the group consisting of the aforementioned divalent-iron compounds and divalent-manganese compounds, it is usually preferable to set it to such an amount in which the entire amount of the divalent metallic compounds makes from 0.9 to 1.2 moles, and it is more preferable to set it to such an amount in which the entire amount makes from 0.95 to 1.1 moles, with respect to 1-mole boric acid.

Moreover, as to an amount of use for lithium hydroxide, it is usually preferable to set it in an amount of from 0. 9 to 1.2 moles, and it is more preferable to set it in an amount of from 0.95 to 1.1 moles, with respect to 1-mole boric acid.

<Production Process for Lithium-borate Compound>

In a production process for lithium-borate compound according to the present invention, it is necessary to react the aforementioned raw materials, namely, a divalent metallic compound including at least one member of compounds that is selected from the group consisting of divalent-iron compounds and divalent-manganese compounds, and boric acid as well as lithium hydroxide, in a molten salt of a carbonate mixture comprising lithium carbonate and at least one member of alkali-metal carbonates that is selected from the group consisting of potassium carbonate, sodium carbonate, rubidium carbonate and cesium carbonate in a reducing atmosphere.

Although it is not restrictive particularly as to a specific reaction method, it is usually advisable to mix the aforementioned carbonate mixture, the divalent metallic compound, boric acid and lithium hydroxide, and then to melt the carbonate mixture by doing heating after mixing them uniformly with use of ball mill, and the like. By means of this, the reaction between the divalent metallic compound, boric acid and lithium hydroxide progresses in a molten carbonate, and thereby it is possible to obtain a targeted lithium-borate-system compound.

On this occasion, it is not restrictive particularly as to the mixing proportion between the carbonate mixture and the raw material that comprises the divalent metallic compound, boric acid and lithium hydroxide, and so it can be made up of amounts that enable the rawmaterial to disperse uniformly in amolten salt of the carbonate mixture. For example, it is preferable that a summed amount of the divalent metallic compound, boric acid and lithium hydroxide can make an amount that falls in a range of from 100 to 300 parts by weight, and it is more preferable that the summed amount can make an amount that falls in a range of from 175 to 250 parts by weight, with respect to a summed amount of the carbonate mixture taken as 100 parts by weight.

It is preferable to set a temperature of the reaction between the raw-material compounds in a molten salt of the carbonate mixture to be from 400 to 650 °C, and it is more preferable to set the temperature to be from 450 to 600 °C. Therefore, it is necessary to prepare a composition of the carbonate mixture so that the resultant molten temperature of the carbonate mixture falls down below a targeted reaction temperature.

It is necessary that the aforementioned reaction can be carried out in a reducing atmosphere in order to retain metallic ions at divalence. However, in a case where the reducing action is too strong, divalent metallic ions might be reduced to the metallic state. Consequently, it is preferable to react the raw-material compounds in a mixed gas atmosphere of a reducing gas and at least one member of gases that is selected from the group consisting of nitrogen and carbon dioxide. This leads to making it feasible to maintain metallic ions to be divalent. As to a ratio between a reducing gas and at least one member of gases that is selected from the group consisting of nitrogen and carbon dioxide, it is advisable to set the reducing gas so as to make from 0.01 to 0.2 mol, for instance, and it is preferable to set it so as to make from 0.03 to 0.1 mol, with respect to 1 mol of at least one member of gases that is selected from the group consisting of nitrogen and carbon dioxide. As for the reducing gas, it is possible to use hydrogen, carbon monoxide, and the like, for instance, and hydrogen is preferable especially.

As to a pressure of the aforementioned mixed gas, there are not any limitations especially. Although it is advisable to usually set it at an atmospheric pressure, it is even good to put the mixed gas either in a pressurized condition or in a depressurized condition.

It is allowable to usually set a time for the reaction between the raw-material compounds comprising the divalent metallic compound, boric acid and lithium hydroxide to be from 1 to 20 hours.

By means of removing the alkali-metal carbonate being used as a flux after carrying out the aforementioned reaction, it is possible to obtain a targeted lithium-borate-system compound.

As for a method of removing the alkali-metal carbonate, it is advisable to dissolve and then remove the alkali-metal carbonate by means of washing products with use of a solvent being capable of dissolving the alkali-metal carbonate. For example, although it is feasible to use water as the solvent, it is preferable to use a nonaqueous solvent, such as alcohol or acetone, and the like, in order to prevent the oxidation of metal to be included in the resulting lithium-borate-system compound. In particular, it is preferable to use acetic anhydride and acetic acid in such a proportion as from 2:1 to 1:1 by weight ratio. In addition to being good in the action of dissolving and then removing the alkali-metal carbonate, this mixed solvent can inhibit water from separating, due to the action that acetic anhydride takes in water to produce acetic acid in a case where the acetic acid reacts with the alkali-metal carbonate to produce water. Note that, in the case of using acetic anhydride and acetic acid, it is preferable to first mix acetic anhydride with products, and then to grind them using mortar, and so forth, in order to make the particles finer, and thereafter to add acetic acid to them in such a state that the acetic anhydride gets accustomed to the particles. In accordance with this method, it is possible to effectively inhibit the oxidation and decomposition of targeted object, because water, which is generated by the reaction between the acetic acid and the alkali-metal carbonate, reacts quickly with the acetic anhydride so that it is possible for products and water to reduce the opportunity of making contact with each other.

<Lithium-borate-system Compound>

A lithium-borate-system compound that is obtainable by means of the aforementioned process is a compound that is expressed by a compositional formula:

$$Li_{1+a-b}A_bM_{1-x}M'_xBO_{3+c}$$

(In the formula, "A" is at least one element that is selected from the group consisting of Na, K, Rb and Cs; "M" is at least one element that is selected from the group consisting of Fe and Mn; "M'" is at least one element that is selected from the group consisting of Mg, Ca, Co, Al, Ni, Nb, Mo, W, Ti and Zr; and the respective subscripts are specified as follows: $0 \leqq x \leqq 0.5$; $0 < a < 1$; $0 \leqq b < 0.2$; $0 < c < 0.3$; and $a > b$).

The compound becomes a compound that includes Li ions excessively, compared with the stoichiometric amount, because lithium carbonate is included in the molten salt so that lithium ions in the molten salt force into the Li-ion sites of lithium-borate compound interstitially. Moreover, by means of carrying out the reaction at such a relatively low temperature as from 400 to 650 °C in a molten salt of the carbonate-salt mixture, the growth of crystal grains is inhibited, such fine particles whose average particle diameters are from 50 nm to 20 $\mu$m are made, and furthermore the amount of impurity phases is decreased greatly. As a result, in the case of being used as a positive-electrode active material for lithium-ion secondary battery, materials having favorable cyclic characteristics and high capacities are made. It is particularly preferable that a lithium-borate-system compound that is obtainable by the aforementioned process can be those whose average particle diameters fall in a range of from 50 nm to 1 $\mu$m. Note that, in the present description, the "average particle diameters" are values that were found by means of a laser-diffraction particle-size-distribution measuring apparatus (e.g., "SALD-7100" produced by SHIMADZU).

<Carbon Coating Treatment>

In the lithium-borate-system compound that is obtainable by the aforementioned process, and which is exhibited by the compositional formula: $Li_{1+a-b}A_bM_{1-x}M'_xBO_{3+c}$, it is preferable to further carry out coating treatment by means of carbon in order to upgrade the conductivity.

As to a specific method of the coating treatment, it is not restrictive particularly, though a thermal decomposition method is applicable to it, thermal decomposition method in which an organic substance making a carbonaceous source is carbonized by means of heat treatment after mixing the organic substance with the lithium-borate-system compound uniformly. However, it is particularly preferable to apply a ball-milling method to it, ball-milling method in which a heat treatment is carried out after adding a carbonaceous material and $Li_2CO_3$ to the aforementioned lithium-borate compound and then mixing them uniformly until the resulting lithium-borate-system compound turns into being amorphous. In accordance with this method, the lithium-borate-system compound serving as a positive-electrode active material is turned into being amorphous by means of ball milling, and is thereby mixed uniformly with carbon so that the adhesiveness increases. Furthermore, it is possible to do coating, because carbon precipitates uniformly around the aforesaid lithium-borate-system compound by means of the heat treatment, simultaneously with the recrystallization of the aforesaid lithium-borate-system compound. On this occasion, due to the fact that $Li_2CO_3$ exists, the lithium-rich borate-system compound does not at all turn into being deficient in lithium, but becomes one which shows a high charging-discharging capacity.

As to an extent of turning into being amorphous, it is advisable that a ratio, $B(011)_{crystal}/B(011)_{mill}$, can fall in a range of from 0.1 to 0.5 approximately in a case where a half-value width of the diffraction peak being derived from the (011) plane regarding a sample having crystallinity before being subjected to ball milling is labeled $B(011)_{crystal}$ and another half-value width of the diffraction peak being derived from the (011) plane of the sample being obtained by means of ball milling is labeled $B(011)_{mill}$ in an X-ray diffraction measurement in which the $K_\alpha$ ray of Cu is the light source.

In this method, it is possible to use acetylene black (or AB), KETJENBLACK (or KB), graphite, and the like, as for the carbonaceous material.

As to a mixing proportion of the lithium-borate-system compound, that of the carbonaceous material, and that of $Li_2CO_3$, it is advisable to mix the carbonaceous material in an amount of from 20 to 40 parts by weight, and $Li_2CO_3$ in an amount of from 20 to 40 parts by weight, with respect to the lithium-borate-system compound in an amount of 100 parts by weight.

The heat treatment is carried out after carrying out a ball-milling treatment until the lithium-borate compound turns into being amorphous. The heat treatment is carried out in a reducing atmosphere in order to retain metallic ions being included in the lithium-borate compound at divalence. As for the reducing atmosphere in this case, it is preferable to be within a mixed-gas atmosphere of a reducing gas and at least one member of gases that is selected from the group consisting of nitrogen and carbon dioxide in order to inhibit the divalent metallic ions from being reduced to the metallic states, in the same manner as the synthesis reaction of the lithium-borate-system compound within the molten salt of the carbonate mixture. It is advisable to set a mixing proportion of a reducing gas and that of at least one member of gases that is selected from the group consisting of nitrogen and carbon dioxide similarly to those at the time of the synthesis reaction of the lithium-borate compound.

It is preferable to set a temperature of the heat treatment to be from 500 to 800 °C. In a case where the heat-treatment temperature is too low, it is difficult to uniformly precipitate carbon around the lithium-borate compound. On the other hand, the heat-treatment temperature being too high is not preferable, because the decomposition or lithium deficiency might occur in the resulting lithium-borate-system compound and thereby the resultant charging-discharging capacity declines. It is usually advisable to set a time for the heat treatment to be from 1 to 10 hours.

Moreover, as another method of the carbon coating treatment, it is even good to carry out the heat treatment after adding a carbonaceous material and LiF to the aforementioned lithium-borate-system compound and then mixing them uniformly until the lithium-borate-system compound turns into being amorphous in the same manner as the aforementioned method. In this instance, carbon precipitates uniformly around the aforesaid lithium-borate-system compound to coat it and improve it in the conductivity, simultaneously with the recrystallization of the lithium-borate-system compound. Furthermore, fluorine atoms substitute for a part of oxygen atoms in the lithium-borate-system compound. Thus, a fluorine-containing lithium-borate-system compound can be formed, the fluorine-containing lithium-borate-system compound being expressed by a compositional formula:

$$Li_{1+a-b}A_bM_{1-x}M'_xBO_{3+c-y}F_{2y}$$

(In the formula, "A" is at least one element that is selected from the group consisting of Na, K, Rb and Cs; "M" is Fe or Mn; "M'" is at least one element that is selected from the group consisting of Mg, Ca, Co, Al, Ni, Nb, Mo, W, Ti and Zr; and the respective subscripts are specified as follows: $0 \leqq x \leqq 0.5$; $0 < a < 1$; $0 \leqq b < 0.2$; $0 < c < 0.3$; $0 < y < 1$; and $a > b$).

This compound makes a positive-electrode active material that has much better performance, because the resulting average voltage is raised from 2.6 V to 2.8 V by means of added F in a case where it is used as a positive-electrode active material. On this occasion, the resultant lithium-rich borate-system compound makes one which shows a high charging-discharging capacity, because it does not at all turn into being poor in lithium, due to the presence of LiF.

As to mixing proportions of the lithium-borate-system compound, the carbonaceous material, and LiF in this method, it is allowable to mix the carbonaceous material in an amount of from 20 to 40 parts by weight, and LiF in an amount of from 10 to 40 parts by weight, with respect to the lithium-borate-system compound in an amount of 100 parts by weight. Furthermore, it is even good that $Li_2CO_3$ can be included, if needed. As to conditions of ball milling and heat treatment, it is permissible to set them similarly to those in the aforementioned case.

<Positive Electrode for Lithium-ion Secondary Battery>

It is possible to effectively employ any one of the aforementioned lithium-borate-system compound that is obtainable by means of doing the synthesis in a molten salt, the lithium-borate-system compound to which the carbon-coating treatment is carried out, and the lithium-borate-system compound to which fluorine is added, as an active material for the positive electrode of lithium-ion secondary battery. It is possible for a positive electrode using one of these lithium-borate-system compounds to have the same structure as that of an ordinary positive electrode for lithium-ion secondary battery.

For example, it is possible to fabricate a positive electrode by means of adding an electrically-conductive assistant agent, such as acetylene black (or AB), KETJENBLACK (or KB) or gas-phase method carbon fiber (e.g., vapor growth carbon fiber (or VGCF)), a binder, such as polyvinylidene fluoride (e.g., polyvinylidene difluoride (or PVdF)), polytetrafluoroethylene (or PTFE) or styrene-butylene rubber (or SBR), and a solvent, such as N-methyl-2-pyrolidione (or NMP), to one of the aforementioned lithium-borate-system compounds, turning these into being pasty, and then coating the resulting pasty product onto an electricity collector. As to a using amount of the electrically-conductive assistant agent, although it is not restrictive particularly, it is possible to set it in an amount of from 5 to 20 parts by weight with respect to the lithium-borate-system compound in an amount of 100 parts by weigh, for instance. Moreover, as to a using amount of the binder, although it is not restrictive particularly, either, it is possible to set it in an amount of from 5 to 20 parts by weight with respect to the lithium-borate-system compound in an amount of 100 parts by weight, for instance. Moreover, as another method, a positive electrode can also be manufactured by means of such a method in which one being made by mixing the lithium-borate-system compound with the aforementioned electrically-conductive assistant agent and binder is kneaded as a film shape with use of mortar or pressing machine and then the resultant film-shaped product is press bonded onto an electricity collector by pressing machine.

As for the electricity collector, there are not any limitations, and so it is possible to use materials that have been heretofore employed as positive electrodes for lithium-ion secondary battery conventionally, such as aluminum foils, aluminum meshes and stainless steel meshes, for instance. Furthermore, it is possible to employ carbon nonwoven fabrics, carbon woven fabrics, and the like, too, as the electricity collector.

In the positive electrode for lithium-ion secondary battery according to the present invention, it is not restrictive particularly as to its configuration, thickness, and the like. However, it is preferable to set the thickness to be from 10 to 200 $\mu$m, more preferably, to be from 20 to 100 $\mu$m, for instance, by means of doing compression after filling up the active material. Therefore, it is advisable to suitably determine a fill-up amount of the active material so as to make the aforementioned thickness after being compressed, in compliance with the types, structures, and so forth, of electricity collectors to be employed.

<Lithium-ion Secondary Battery>

It is possible to manufacture a lithium-ion secondary battery that uses the aforementioned positive electrode for lithium-ion secondary battery by means of publicly-known methods. That is, it is advisable to follow an ordinary process in order to assemble a lithium-ion secondary battery while employing the aforementioned positive electrode as a positive-electrode material; employing publicly-known metallic lithium, a carbon-system material such as graphite, a silicon-system material such as silicon thin film, an alloy-system material such as copper-tin or cobalt-tin, or an oxide material such as lithium titanate, as a negative-electrode material; employing a solution, in which a lithium salt, such as lithium perchlorate, $LiPF_6$, $LiBF_4$ or $LiCF_3SO_3$, is dissolved in a concentration of from 0.5 mol/L to 1.7 mol/L in a publicly-known nonaqueous-system solvent, such as ethylene carbonate, dimethyl carbonate, propylene carbonate or dimethyl carbonate, as an electrolytic solution; and further employing the other publicly-known constituent elements for battery.

Effect of the Invention

The lithium-borate-system compounds that are obtainable by means of the processes according to the present invention are inexpensive, are those which are obtainable using raw materials that are abundant in the resource amounts and are low in the environmental loads, and are materials that can keep down the elimination of oxygen in a case where they are used as a positive-electrode active material for lithium-ion secondary battery.

In particular, in accordance with the present invention, it is possible to obtain lithium-borate compounds, which are useful as positive-electrode active materials for lithium-ion secondary battery that has a high capacity and is good in terms of cyclic characteristics as well, by means of such a relatively simple and easy means as the reaction in a molten salt.

BRIEF DESCRIPTION OF THE DRAWINGS

Fig. 1 is a diagram that illustrates an X-ray diffraction pattern of a product according to Example No. 1; and
Fig. 2 is a scanning electron microscope (or SEM) photograph of the product according to Example No. 1.

BEST MODE FOR CARRYING OUT THE INVENTION

Hereinafter, the present invention will be explained in more detail while giving examples. The present invention cannot necessarily be limited to the examples.

<Example No. 1>

Synthesis of Lithium-rich Borate-system Compound, and Charging-discharging Characteristics of Battery using the Same

Iron oxalate, $FeC_2O_4 \cdot 2H_2O$ (produced by SIGMA-ALDRICH, and with 99.99% purity), anhydrous lithium hydroxide, LiOH (produced by KISHIDA KAGAKU, and with 98% purity), and boric acid, $H_3BO_3$ (produced by KISHIDA KAGAKU, and with 99.5% purity), were used in an amount of 0.005 moles, respectively, as raw materials; and these were mixed with a carbonate mixture (e.g. , one which was made by mixing lithium carbonate (produced by KISHIDA KAGAKU, and with 99. 9% purity), sodium carbonate (produced by KISHIDA KAGAKU, and with 99.5% purity) and potassium carbonate (produced by KISHIDA KAGAKU, and with 99.5% purity) in a ratio of 0.435:0.315:0.25 by mol). The mixing proportion was set at such a proportion that a summed amount of the iron oxalate, lithium hydroxide and boric acid was 225 parts by weight with respect to 100 parts by weight of the carbonate mixture.

After adding 20 mL of acetone to these, they were mixed by a ball mill made of zirconia at a rate of 500 rpm for 60 minutes, and were then dried. Thereafter, the thus obtained powder was heated in a golden crucible, and was then heated to 400 °C in a mixed-gas atmosphere of carbon dioxide (e.g., 100-mL/min flow volume) and hydrogen (e.g., 3-mL/min flow volume) in order to react them for 15 hours in a state where the carbonate mixture was fused.

After the reaction, the temperature was lowered. At the time of reaching 100 °C, the entirety of a reactor core, the reaction system, was taken from out of an electric furnace, the heater, and was then cooled rapidly while keeping letting the gases pass through.

Subsequently, the resulting product was grounded with a mortar after adding acetic anhydride (e.g., 20 mL) to it. Then, the carbonates, and the like, were reacted to remove them after adding acetic acid (e.g., 10 mL) to it. Thus, a powder of $LiFeBO_3$ was obtained by doing filtration.

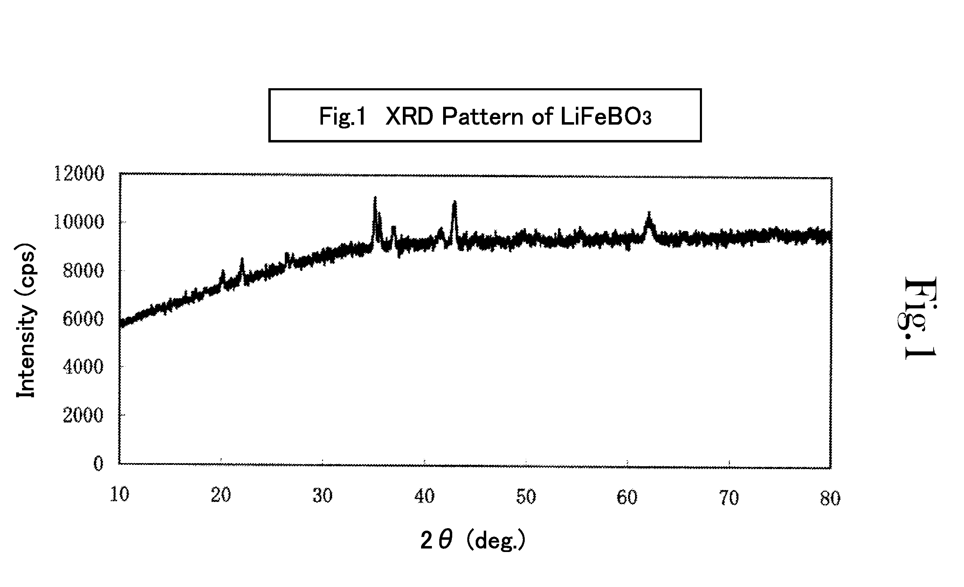

An X-ray diffraction measurement was carried out for the obtained product by means of a powder X-ray diffraction apparatus with use of the $CuK_\alpha$ ray. The resulting XRD pattern is shown in Fig. 1. This XRD pattern agreed with the reported pattern of $LiFeBO_3$ in the space group "C2/c" virtually.

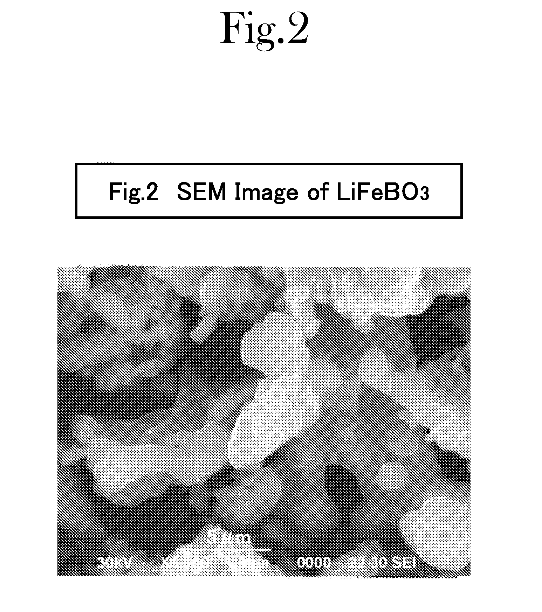

Moreover, a scanning electron microscope (or SEM) photograph of the aforesaid product is shown in Fig. 2. It was possible to ascertain from Fig. 2 that the product was a powder that comprised crystal particles with about a few micrometers or less.

In addition, as a result of doing elemental analysis for the aforesaid product by means of an inductively-coupled plasma (or ICP) method, it was possible to ascertain that it had a compositional formula, $Li_{1.04}FeBO_{3.10}$, and that it was a lithium-rich $LiFeBO_3$-type lithium-borate-system compound.

Subsequently, 50 parts by weight of acetylene black (being represented as "AB" hereinafter) and 10 parts by weight of $Li_2CO_3$ were added to 100 pats by weight of the powder being obtained by the aforementioned process. Then, they were subj ected to a milling process at a rate of 450 rpm for 5 hours with use of a planetary ball mill (with 5-mm zirconia balls), and were then subjected to a heat treatment at 700 °C for 2 hours in a mixed-gas atmosphere of carbon dioxide and hydrogen (e.g., $CO_2 : H_2$ = 100:3 by molar ratio) .

25 parts by weight of a mixture of acetylene black and PTFE (e.g. a mixture with a ratio, AB: PTFE = 2:1 by weight) was added with respect to 100 parts by weight of the powder being obtained. Then, an electrode was prepared by means of a sheet method, and was vacuum dried at 140 °C for 3 hours. Thereafter, a trial coin battery was made with use of the following: a solution serving as the electrolytic solution, solution in which $LiPF_6$ was dissolved to make 1M in a mixture having a ratio, ethylene carbonate (or EC) : diethylene carbonate (or DEC) = 1:1; and a polypropylene film (e.g., "CELGARD 2400" produced by CELGARD) serving as the separator.

As a result of carrying out a charging-discharging test for this coin battery at 60 °C with 0.05 mA in a voltage range of from 4.2 to 2 V, the charging capacity after 5 cycles was about 100 mAh/g. Moreover, upon measuring the cyclic characteristics under the same conditions, favorable cyclic characteristics were demonstrated because the average voltage was 2.62 V after 50 cycles. These results are shown in Table 1 below.

Moreover, the battery characteristics, which were measured in the same manner for a material that was synthesized by a process (e.g., a solid-phase reaction method) in which lithium carbonate, $Li_2CO_3$, iron oxalate, $FeC_2O_4 \cdot 2H_2O$, and boric acid, $H_3BO_3$, were heat treated at 650 °C for 10 hours after subjecting them to ball milling, are shown in Table 1 below.

(TABLE 1)

| | Discharging Capacity after 5 Cycles (mAh/g) | Average Voltage (V) | Number of Cycles |
|---|---|---|---|
| Comp. Ex. No. 1 (Solid-phase Reaction Method) | 50 | 2.55 | 20 |
| Example No. 1 (Molten-salt Method) | 100 | 2.62 | 50 |

As can be evident from the results above, it was appreciated that lithium-borate-system materials, which are favorable in the cyclic characteristics and have higher capacities, are obtainable in accordance with the process in which raw-material compounds are reacted in the molten salt of carbonate mixture.

<Example No. 2>

Lithium-rich borate-system compounds, which were expressed by a compositional formula: $Li_{1+a-b}A_bM_{1-x}M'_xBO_{3+c}$ (in the formula, "A" is at least one element that is selected from the group consisting of Na, K, Rb and Cs; "M" is at least one element that is selected from the group consisting of Fe and Mn; "M'" is at least one element that is selected from the group consisting of Mg, Ca, Co, Al, Ni, Nb, Mo, W, Ti and Zr; and the respective subscripts are specified as follows: $0 \leqq x \leqq 0.5$; $0 < a < 1$; $0 \leqq b < 0.2$; $0 < c < 0.3$; and $a > b$), were synthesized in the same manner as Example No. 1, except that metallic components being in compliance with target compositions shown in Table 2 below were used along with the iron oxalate that was used in the process according to Example No. 1. Moreover, lithium-rich borate-system compounds, which were expressed by the compositional formula above, were synthesized in the same manner as Example No. 1 except that metallic components being in compliance with target compositions shown in Table 3 below were used instead of the iron oxalate that was used in the process according to Example No. 1.

Note that, as for the raw materials, the following were used: iron oxalate, $FeC_2O_4 \cdot 2H_2O$ (produced by SIGMA-ALDRICH, and with 99.99% purity); anhydrous lithium hydroxide, LiOH (produced by KISHIDA KAGAKU, and with 98% purity) ; boric acid, $H_3BO_3$ (produced by KISHIDA KAGAKU, with 99.5% purity); manganese oxalate; cobalt oxalate; magnesium sulfate; nickel oxide; niobium oxide; calcium oxide; aluminum oxide; lithium molybdenum oxide; and lithium tungsten oxide. The number of moles for each of the raw materials was adjusted so as to make the same metallic-component ratio as the metallic-component ratio of target substance in compliance with a targeted compound. Moreover, as to the compounds other than the lithium hydroxide and boric acid, they were used so that the total number of moles for the metallic element made 0.005 moles.

Regarding the products that were after water-soluble substances, such as the carbonate salts, had been removed, the results of the elemental analysis (i.e., elemental molar ratios) that were found by means of an ICP method are shown in Table 2 and Table 3 below. As can be evident from these tables, it was possible to ascertain that the products were all found to be lithium-rich lithium-borate-system compounds.

(TABLE 2)

| Results of ICP Elemental Analysis ("M"=Fe, "x"=0.1, and "y"=0) | | | | | | | | | | | | | | | | | |
|---|---|---|---|---|---|---|---|---|---|---|---|---|---|---|---|---|---|
| "M'" | Li | K | Na | Fe | B | O | Mn | Co | Ni | Nb | Mo | W | Mg | Al | Ca | Ti | Zr |
| Mn | 1.07 | 0.02 | 0.01 | 0.9 | 1 | 3.04 | 0.10 | | | | | | | | | | |
| Co | 1.05 | 0.02 | 0.01 | 0.9 | 1 | 3.03 | | 0.10 | | | | | | | | | |
| Ni | 1.04 | 0.02 | 0.01 | 0.9 | 1 | 3.06 | | | 0.10 | | | | | | | | |
| Nb | 1.06 | 0.02 | 0.01 | 0.9 | 1 | 3.04 | | | | 0.10 | | | | | | | |
| Mo | 1.06 | 0.02 | 0.01 | 0.9 | 1 | 3.03 | | | | | 0.10 | | | | | | |
| W | 1.05 | 0.02 | 0.01 | 0.9 | 1 | 3.05 | | | | | | 0.10 | | | | | |
| Mg | 1.08 | 0.02 | 0.01 | 0.9 | 1 | 3.03 | | | | | | | 0.10 | | | | |
| Al | 1.03 | 0.02 | 0.01 | 0.9 | 1 | 3.04 | | | | | | | | 0.10 | | | |
| Ca | 1.04 | 0.02 | 0.01 | 0.9 | 1 | 3.05 | | | | | | | | | 0.10 | | |
| Ti | 1.03 | 0.02 | 0.01 | 0.9 | 1 | 3.02 | | | | | | | | | | 0.10 | |
| Zr | 1.05 | 0.02 | 0.01 | 0.9 | 1 | 3.05 | | | | | | | | | | | 0.10 |

(TABLE 3)

| Results of ICP Elemental Analysis ("M"=Mn, "x"=0.1, and "y"=0) | | | | | | | | | | | | | | | | |
|---|---|---|---|---|---|---|---|---|---|---|---|---|---|---|---|---|
| "M'" | Li | K | Na | Mn | B | O | Co | Ni | Nb | Mo | W | Mg | Al | Ca | Ti | Zr |
| Co | 1.02 | 0.01 | 0.01 | 0.9 | 1 | 3.03 | 0.10 | | | | | | | | | |
| Ni | 1.05 | 0.01 | 0.01 | 0.9 | 1 | 3.04 | | 0.10 | | | | | | | | |
| Nb | 1.03 | 0.01 | 0.01 | 0.9 | 1 | 3.07 | | | 0.10 | | | | | | | |
| Mo | 1.05 | 0.01 | 0.01 | 0.9 | 1 | 3.06 | | | | 0.10 | | | | | | |
| W | 1.04 | 0.01 | 0.01 | 0.9 | 1 | 3.04 | | | | | 0.10 | | | | | |
| Mg | 1.06 | 0.01 | 0.01 | 0.9 | 1 | 3.03 | | | | | | 0.10 | | | | |
| Al | 1.02 | 0.01 | 0.01 | 0.9 | 1 | 3.05 | | | | | | | 0.10 | | | |
| Ca | 1.04 | 0.01 | 0.01 | 0.9 | 1 | 3.04 | | | | | | | | 0.10 | | |
| Ti | 1.03 | 0.01 | 0.01 | 0.9 | 1 | 3.03 | | | | | | | | | 0.10 | |
| Zr | 1.06 | 0.01 | 0.01 | 0.9 | 1 | 3.04 | | | | | | | | | | 0.10 |

Subsequently, for each of the lithium-borate-system compounds being obtained by the aforementioned process, the milling treatment and heat treatment were carried out in the same manner as Example No. 1 after adding acetylene black and $Li_2CO_3$ to them. Since the XRD patterns of the products after the heat treatment agreed well with the XRD patterns of the samples prior to the heat treatment, it was possible to ascertain that the lithium-rich borate-system compounds maintained the crystal structures without ever being decomposed.

Thereafter, coin batteries were prepared in the same manner as Example No. 1, and the charging-discharging characteristics of the respective batteries were measured. The results are shown in Table 4 and Table 5 below. From these results, it is evident that the respective compounds shown in Table 4 and Table 5 below had favorable cyclic characteristics and higher capacities.

(TABLE 4)

| ("M"=Fe, "x"=0.1, and "y"=0) | | | |
|---|---|---|---|
| "M'" | Discharging Capacity after 5 Cycles (mAh/g) | Average Voltage (V) | Number of Cycles |
| Mn | 110 | 2.65 | 50 |
| Co | 115 | 2.73 | 50 |
| Ni | 116 | 2.75 | 50 |
| Nb | 112 | 2.61 | 50 |
| Mo | 113 | 2.60 | 50 |
| W | 110 | 2.61 | 50 |
| Mg | 114 | 2.62 | 50 |
| Al | 113 | 2.61 | 50 |
| Ca | 112 | 2.62 | 50 |
| Ti | 110 | 2.63 | 50 |
| Zr | 115 | 2.61 | 50 |

(TABLE 5)

| ("M"=Mn, "x"=0.1, and "y"=0) | | | |
|---|---|---|---|
| "M'" | Discharging Capacity after 5 Cycles (mAh/g) | Average Voltage (V) | Number of Cycles |
| Co | 112 | 2.85 | 50 |
| Ni | 113 | 2.86 | 50 |
| Nb | 110 | 2.80 | 50 |
| Mo | 114 | 2.81 | 50 |
| W | 113 | 2.80 | 50 |
| Mg | 112 | 2.82 | 50 |
| Al | 110 | 2.80 | 50 |
| Ca | 110 | 2.83 | 50 |
| Ti | 112 | 2.81 | 50 |
| Zr | 115 | 2.82 | 50 |

<Example No. 3 (Fluorine Impartation)>

50 parts by weight of acetylene black (being represented as "AB" hereinafter) and 20 parts by weight of LiF were added to 100 parts by weight of the products (i.e., lithium-borate-system compounds) that were obtained after water-soluble substances, such as the carbonate salts, had been removed in Example No. 2. Then, they were subjected to a milling process at a rate of 450 rpm for 5 hours with use of a planetary ball mill (with 5-mm zirconia balls), and were then subjected to a heat treatment at 700 °C for 2 hours in a mixed-gas atmosphere of carbon dioxide and hydrogen (e.g., $CO_2$: $H_2$ = 100:3 by molar ratio). Since the XRD patterns of the products after the heat treatment agreed well with the XRD patterns of the samples prior to the heat treatment, it was possible to ascertain that the lithium-rich borate-system compounds maintained the crystal structures without ever being decomposed. Moreover, the results of the elemental analysis (i.e., elemental molar ratios) that were found by means of an ICP method are shown in Table 6 and Table 7 below. As can be evident from these tables, it was possible to ascertain that the products were all found to be lithium-rich fluorine-containing lithium-borate-system compounds.

(TABLE 6)

| "M'" | Li | K | Na | Fe | B | O | F | Mn | Co | Ni | Nb | Mo | W | Mg | Al | Ca | Ti | Zr |
|---|---|---|---|---|---|---|---|---|---|---|---|---|---|---|---|---|---|---|
| Results of ICP Elemental Analysis ("M"=Fe, "x"=0.1, and "y"=0.1) | | | | | | | | | | | | | | | | | | |
| Mn | 1.03 | 0.02 | 0.01 | 0.9 | 1 | 3.02 | 0.2 | 0.10 | | | | | | | | | | |
| Co | 1.05 | 0.02 | 0.01 | 0.9 | 1 | 3.03 | 0.2 | | 0.10 | | | | | | | | | |
| Ni | 1.04 | 0.02 | 0.01 | 0.9 | 1 | 3.04 | 0.2 | | | 0.10 | | | | | | | | |
| Nb | 1.02 | 0.02 | 0.01 | 0.9 | 1 | 3.06 | 0.2 | | | | 0.10 | | | | | | | |
| Mo | 1.04 | 0.02 | 0.01 | 0.9 | 1 | 3.05 | 0.2 | | | | | 0.10 | | | | | | |
| W | 1.05 | 0.02 | 0.01 | 0.9 | 1 | 3.03 | 0.2 | | | | | | 0.10 | | | | | |
| Mg | 1.04 | 0.02 | 0.01 | 0.9 | 1 | 3.04 | 0.2 | | | | | | | 0.10 | | | | |
| Al | 1.06 | 0.02 | 0.01 | 0.9 | 1 | 3.05 | 0.2 | | | | | | | | 0.10 | | | |
| Ca | 1.03 | 0.02 | 0.01 | 0.9 | 1 | 3.03 | 0.2 | | | | | | | | | 0.10 | | |
| Ti | 1.04 | 0.02 | 0.01 | 0.9 | 1 | 3.04 | 0.2 | | | | | | | | | | 0.10 | |
| Zr | 1.03 | 0.02 | 0.01 | 0.9 | 1 | 3.02 | 0.2 | | | | | | | | | | | 0.10 |

(TABLE 7)

| Results of ICP Elemental Analysis ("M"=Mn, "x"=0.1, and "y"=0.1) | | | | | | | | | | | | | | | | | |
|---|---|---|---|---|---|---|---|---|---|---|---|---|---|---|---|---|---|
| "M'" | Li | K | Na | Mn | B | O | F | Co | Ni | Nb | Mo | W | Mg | Al | Ca | Ti | Zr |
| Co | 1.04 | 0.01 | 0.01 | 0.9 | 1 | 3.05 | 0.2 | 0.10 | | | | | | | | | |
| Ni | 1.03 | 0.01 | 0.01 | 0.9 | 1 | 3.03 | 0.2 | | 0.10 | | | | | | | | |
| Nb | 1.05 | 0.01 | 0.01 | 0.9 | 1 | 3.04 | 0.2 | | | 0.10 | | | | | | | |
| Mo | 1.04 | 0.01 | 0.01 | 0.9 | 1 | 3.02 | 0.2 | | | | 0.10 | | | | | | |
| W | 1.03 | 0.01 | 0.01 | 0.9 | 1 | 3.05 | 0.2 | | | | | 0.10 | | | | | |
| Mg | 1.04 | 0.01 | 0.01 | 0.9 | 1 | 3.03 | 0.2 | | | | | | 0.10 | | | | |
| Al | 1.03 | 0.01 | 0.01 | 0.9 | 1 | 3.04 | 0.2 | | | | | | | 0.10 | | | |
| Ca | 1.05 | 0.01 | 0.01 | 0.9 | 1 | 3.02 | 0.2 | | | | | | | | 0.10 | | |
| Ti | 1.03 | 0.01 | 0.01 | 0.9 | 1 | 3.03 | 0.2 | | | | | | | | | 0.10 | |
| Zr | 1.04 | 0.01 | 0.01 | 0.9 | 1 | 3.04 | 0.2 | | | | | | | | | | 0.10 |

Thereafter, coin batteries were prepared in the same manner as Example No. 1, and the charging-discharging characteristics of the respective batteries were measured. The results are shown in Table 8 and Table 9 below. From these results, it was possible to ascertain that the respective compounds were those which had favorable cyclic characteristics and higher capacities, and especially that the average voltages rose because of the fact that fluorine was added.

(TABLE 8)

| ("M"=Fe, "x"=0.1, and "y"=0.1) | | | |
|---|---|---|---|
| "M'" | Discharging Capacity after 5 Cycles (mAh/g) | Average Voltage (V) | Number of Cycles |
| Mn | 112 | 2.83 | 50 |
| Co | 116 | 2.91 | 50 |
| Ni | 117 | 2.93 | 50 |
| Nb | 113 | 2.80 | 50 |
| Mo | 112 | 2.79 | 50 |
| W | 110 | 2.81 | 50 |
| Mg | 111 | 2.82 | 50 |
| Al | 110 | 2.84 | 50 |
| Ca | 113 | 2.80 | 50 |
| Ti | 114 | 2.79 | 50 |
| Zr | 112 | 2.78 | 50 |

(TABLE 9)

| ("M"=Mn, "x"=0.1, and "y=0.1) | | | |
|---|---|---|---|
| "M'" | Discharging Capacity after 5 Cycles (mAh/g) | Average Voltage (V) | Number of Cycles |
| Co | 113 | 2.98 | 50 |
| Ni | 112 | 3.02 | 50 |
| Nb | 111 | 2.96 | 50 |
| Mo | 115 | 2.95 | 50 |
| W | 113 | 2.97 | 50 |
| Mg | 112 | 2.94 | 50 |
| Al | 113 | 2.96 | 50 |
| Ca | 111 | 2.96 | 50 |
| Ti | 110 | 2.98 | 50 |
| Zr | 117 | 2.97 | 50 |

**Claims**

**1.** A production process for lithium-borate-system compound, the production process being **characterized in that**:

a divalent metallic compound including at least one member of compounds that is selected from the group consisting of divalent-iron compounds and divalent-manganese compounds, and boric acid as well as lithium hydroxide are reacted at 400-650 °C in a molten salt of a carbonate mixture comprising lithium carbonate and at least one member of alkali-metal carbonates that is selected from the group consisting of potassium carbonate, sodium carbonate, rubidium carbonate and cesium carbonate in a reducing atmosphere.

2. The production process as set forth in claim 1, wherein said divalent metallic compound is one which includes:

at least one member of compounds that is selected from the group consisting of divalent-iron compounds and divalent-manganese compounds in an amount of from 50 to 100% by mol; and
a compound that includes at least one member of divalent metallic elements that is selected from the group consisting of Mg, Ca, Co, Al, Ni, Nb, Mo, W, Ti and Zr in an amount of from 0 to 50% by mol;
when the entirety of the metallic compounds is taken as 100% by mol.

3. The process as set forth in claim 1 or 2, wherein the reducing atmosphere is a mixed-gas atmosphere of a reducing gas and at least one member of gases that is selected from the group consisting of nitrogen and carbon dioxide.

4. A production process for lithium-borate-system compound, the production process including a step of removing the alkali-metal carbonate, which is used as a flux, by means of a solvent, after producing a lithium-borate-system compound by either one of the processes according to claims 1 through 3.

5. The production process for lithium-borate-system compound as set forth in either one of claims 1 through 4, wherein a lithium-borate-system compound to be formed is a compound being expressed by a compositional formula:

$$Li_{1+a-b}A_bM_{1-x}M'_xBO_{3+c}:$$

where "A" is at least one element that is selected from the group consisting of Na, K, Rb and Cs;
"M" is at least one element that is selected from the group consisting of Fe and Mn;
"M'" is at least one element that is selected from the group consisting of Mg, Ca, Co, Al, Ni, Nb, Mo, W, Ti and Zr; and
the respective subscripts are specified as follows:

$$0 \leqq x \leqq 0.5;$$

$$0 < a < 1;$$

$$0 \leqq b < 0.2;$$

$$0 < c < 0.3;$$

and

$$a > b;$$

in the formula.

6. A production process for lithium-borate-system compound whose electrical conductivity is upgraded, the production process being **characterized in that**:

a heat treatment is carried out in a reducing atmosphere after adding a carbonaceous material and $Li_2CO_3$ to a lithium-borate-system compound being obtained by either one of the processes according to claims 1 through 5 and then mixing them by means of ball mill until they turn into being amorphous.

7. A production process for fluorine-containing lithium-borate-system compound that is expressed by a compositional formula:

$$Li_{1+a-b}A_bM_{1-x}M'_xBO_{3+c-y}F_{2y}:$$

where "A" is at least one element that is selected from the group consisting of Na, K, Rb and Cs; "M" is Fe or Mn; "M'" is at least one element that is selected from the group consisting of Mg, Ca, Co, Al, Ni, Nb, Mo, W, Ti and Zr; and the respective subscripts are specified as follows:

$$0 \leqq x \leqq 0.5;$$

$$0 < a < 1;$$

$$0 \leqq b < 0.2;$$

$$0 < c < 0.3;$$

$$0 < y < 1;$$

and

$$a > b;$$

in the formula;
the production process being **characterized in that**:

a heat treatment is carried out in a reducing atmosphere after adding a carbonaceous material and LiF to a lithium-borate-system compound being obtained by either one of the processes according to claims 1 through 5 and then mixing them by means of ball mill until they turn into being amorphous.

8. A positive-electrode active material for lithium-ion secondary battery, the positive-electrode active material comprising alithium-borate-system compound that is obtained by means of either one of the processes according to claims 1 through 7.

9. A positive electrode for lithium secondary battery, the positive electrode including a lithium-borate-system compound that is obtained by means of either one of the processes according to claims 1 through 7 as an active material.

10. A lithium secondary battery including the positive electrode as set forth in claim 9 as a constituent element.

# Fig.1

Fig.1 XRD Pattern of LiFeBO₃

# Fig.2

Fig.2   SEM Image of LiFeBO3

## INTERNATIONAL SEARCH REPORT

| International application No. |
|---|
| PCT/JP2010/054075 |

**A. CLASSIFICATION OF SUBJECT MATTER**
*C01B35/12*(2006.01)i, *H01M4/58*(2010.01)i

According to International Patent Classification (IPC) or to both national classification and IPC

**B. FIELDS SEARCHED**

Minimum documentation searched (classification system followed by classification symbols)
C01B35/00-35/18, H01M4/00-4/98

Documentation searched other than minimum documentation to the extent that such documents are included in the fields searched
Jitsuyo Shinan Koho          1922-1996     Jitsuyo Shinan Toroku Koho     1996-2010
Kokai Jitsuyo Shinan Koho    1971-2010     Toroku Jitsuyo Shinan Koho     1994-2010

Electronic data base consulted during the international search (name of data base and, where practicable, search terms used)
JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 2005-183088 A  (Nichia Chemical Industries, Ltd.), 07 July 2005 (07.07.2005), (Family: none) | 1-10 |
| A | JP 2004-207051 A  (Kiyotaka SHIGEHARA), 22 July 2004 (22.07.2004), (Family: none) | 1-10 |
| A | JP 2005-112711 A  (Mitsui Mining & Smelting Co., Ltd.), 28 April 2005 (28.04.2005), (Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 26 April, 2010 (26.04.10) | Date of mailing of the international search report 11 May, 2010 (11.05.10) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/054075 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 10-241682 A  (Mitsubishi Cable Industries, Ltd.), 11 September 1998 (11.09.1998), (Family: none) | 1-10 |
| A | JP 2001-064020 A  (Mitsui Mining & Smelting Co., Ltd.), 13 March 2001 (13.03.2001), (Family: none) | 1-10 |
| A | JP 2001-048545 A  (Mitsubishi Chemical Corp.), 20 February 2001 (20.02.2001), (Family: none) | 1-10 |
| A | Y.Z.DONG et al., "The structure and electrochemical performance of $LiFeBO_3$ as a novel Li-battery cathode material", Electrochimica Acta, 2008, Vol.53, p.2339-2345 | 1-10 |
| A | Y.Z.DONG et al., "Phase relations of $Li_2O$-FeO-$B_2O_3$ ternary system and elecrtochemical properties of $LiFeBO_3$ compound", Journal of Alloys and Compounds, 2008, Vol.461, p.585-590 | 1-10 |
| A | V.LEGAGNEUR et al., "$LiMBO_3$(M=Mn, Fe, Co): synthesis, crystal structure and lithium deinsertion/insertion properties", Solid State Ionics, 2001, Vol.139, p.37-46 | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. Z. Dong et al.** *Electrochemie. Acta.,* 2008, vol. 53, 2, 339-2345
- **Y. Z. Dong et al.** *J. Alloys Comp.,* 2008, vol. 461, 585-590
- **V. Legagneur et al.** *Solid State Ionics,* 2001, vol. 139, 37-46